# EUROPEAN PATENT APPLICATION

(11) **EP 4 776 457 A1**
(43) Date of publication of application: **15.07.2026**
(21) Application number: 25151681.1
(22) Date of filing: 14.01.2025
(51) Int. Cl.: H02J 3/00

(54) **MONITORING AND CONTROL SYSTEM FOR A STATIC INDUCTION DEVICE**

(71) Applicant: Hitachi Energy Ltd, 8050 Zürich (CH)
(72) Inventor: Soto, Mauricio, Knightdale, North Carolina 27545 (US); Cheim, Luiz, Raleigh, North Carolina 27603 (US)
(74) Representative: AWA Sweden AB

(57) **Abstract**

There is disclosed herein a computer-implemented method (300) for monitoring an static induction device (3), comprising obtaining time-series data (308) comprising monitoring data (307) for the static induction device (3), and decomposing the time-series data (308) into a plurality of layers (310), each layer (310) comprising a subset of the time-series data (308), wherein at least one layer (310) is configured to contain a respective contribution (420) to the monitoring data (308) from a contributor (418). The method (300) further comprises providing each layer (310), as input, to a respective predictive model (312) of a corresponding plurality of predictive models (312) configured to predict future contributions to the monitoring data (310) from the respective contributor (418), and receiving, as output from the plurality of predictive models (312), respective predictions (314) of future contributions from the contributor (418) of each layer (310). Finally, the method (300) comprises aggregating the predictions (314) from each predictive model (312) to thereby obtain predicted monitoring data (316) for the static induction device (3). In this way, the accuracy of the predictions for how the static induction device monitoring data will change is greatly enhanced, enabling a more pro-active control for a power network.

## Description

### Technical Field

The present disclosure relates to power systems, specifically static induction devices such as power transformers. More particularly, the present disclosure relates to a static induction device monitoring system, and a method performed by such a system.

### Background

Power systems deployed on a power grid typically employ a wide variety of monitoring algorithms to analyze the health and status of components, such as static induction devices (e.g., power transformers or reactors), bushings, or the like, by analyzing readings from sensors.

Since the health of such components depends on the behavior of the grid and the component's operation over time, these monitoring algorithms may be based on the analysis of time-series data, i.e., samples of values over time.

Examples of collected time-series data includes temperature, load, dissolved gas analysis, tap position, cooling control status, vibroacoustics, sweep frequency response analysis, etc. These and several other measurements are analyzed to determine an electric component's health and how its life span gets eroded over time in operation.

Data analysis and artificial intelligence can provide monitoring solutions that accurately predict these measurements and can greatly improve the long-term health of the component and extend the component's lifespan in an exponential way. By providing these predictions, monitoring tools can help reduce insulation material degradation, prevent premature failure, etc.

However, predicting grid and component behavior to ensure the proper operation of components can be a complex task. For example, in the case of power transformers, monitoring tools may analyze a power transformer's current and past status, not the transformer's expected future status, and therefore power grid managers take decisions based only on past and current data, not including a broad data-driven analysis of expected conditions in the future. Therefore, power grid managers do not have all the needed information when having to make strategic control decisions.

This is aggravated even more by the trend of acceleration in electricity usage which is expected to continue to grow over the next decades given the growing popularity of electric vehicles, increased reliance on data centers, and the ever-expanding footprint of smart homes that are pushing the boundaries of traditional grid infrastructure, moving towards distributed generation.

The need for tools that help power grid managers understand how the grid will behave in the future and how components in the grid will react to this shift is increasingly important. For example, these surges in demand can easily overload power transformers leading to a decrease in transformer health, highlighting the limitations of current approaches in a landscape experiencing such rapid change.

There is therefore a desire for monitoring tools and algorithms that can accurately predict future grid and component behavior patterns which would allow power grid managers to make decisions base on future behavior, thereby mitigating the erosion of the component's lifespan, safeguarding the integrity of the power grid and ensuring reliable electricity delivery.

### Summary

Aspects of the present disclosure are directed at providing improved monitoring and control of static induction devices such as power transformers, reactors, or the like. Particularly, it is realized as a part of the present disclosure that predictive models can be deployed to accurately predict future conditions and thereby enable a more informed control of power systems, resulting in a more reliable performance. It will be appreciated that, although the present disclosure focusses on static induction devices, the same approach can be readily applied to other electrical components in a power grid.

According to implementations of aspects of the present disclosure, a wide variety of artificial intelligence models can be created to predict static induction device and grid status. More specifically, aspects of the present disclosure provide a methodology to improve the performance of these models by decomposing time-series data from a static induction device and/or other related data sources, and a means for deploying and/or retraining these models into static induction devices in a power network.

Time-series models ingest vast amounts of historical data, including past patterns of readings from the static induction device's behavior and features around the static induction device (such as ambient temperature, precipitation, etc.). By analyzing these trends, the models learn to identify patterns and relationships between these variables which are both device-specific and location specific where the device is installed. This allows the models to anticipate how these changes will impact a given device and, therefore, power network managers (being either human or automated agents) can take decisions on how to best act to the predicted situation, preferably in advance of the situation.

The solution provided in the present disclosure relates to a methodology to improve the accuracy of such models described previously, by improving the model itself, by dividing the time-series into 'sub time-series components' and then aggregating the result of these subcomponents to obtain more accurate results. The solution further relates to improving the model pipeline by describing improved training of the models, and deployment of the models in monitoring tools and management platforms for power network components.

Specifically, according to an aspect of the present disclosure, there is provided a computer-implemented method for monitoring a static induction device.

The method comprises obtaining time-series data comprising monitoring data for a static induction device and decomposing the time-series data into a plurality of layers, each layer comprising a subset of the time-series data, wherein at least one layer is configured to contain a respective contribution to the monitoring data from a contributor. By decomposing the time-series data into a plurality of layers, it is advantageously possible to account for specific variations in the data that would otherwise be too small in amplitude or that would be considered as part of a noise signal. Sub-optimal use of available data naturally results in sub-optimal monitoring and possibly to the collection of more (unnecessary) data instead of leveraging the full potential of present data. Furthermore, the decomposition of the data into different layers can facilitate the analysis of relationships between certain periods of time and potential variations in monitoring data. Thus, as much as possible of the varying monitoring data can be explicably accounted for in one or more layers, enabling a more accurate prediction. This also leaves a minimal (typically non-zero) amount of 'random', less-explicable, or less-predictable variations in the monitoring data.

The monitoring data may comprise, for example, load data and/or temperature data for the static induction device. The purpose of monitoring a static induction device is, among other objectives, to observe it and to track its performance and health. Load data and/or temperature data are two aspects of a static induction device that need to be kept within limits because of damage risks. However, it is appreciated that other properties, such as physical or electrical properties, also might need to be kept within certain boundaries and thus may also be included in the monitoring data. Besides being indicative of current performance of the static induction device, these properties can also be leveraged to make assumptions about the static induction device's state of health, and to act upon if any maintenance action is desired.

The plurality of layers may comprise a trend layer, a seasonal layer, and a residual layer. Trends, mostly capturing long-term movement or direction of data over a period of time, may be annual, monthly, or of any other determined period, depending on the specific monitored property. Trends may show whether the data is generally increasing, decreasing, or remaining stable. In the case of power networks, a general increase in electricity consumption is an example of a trend. Seasonal data, on the other hand, may capture repeating patterns or cycles that occur at regular intervals within the data. Seasons may be defined for a year (winter, spring, summer and autumn), or for a day (morning, afternoon and nighttime) or even sports seasons, holiday seasons, business seasons and any other type of "season" may fall within seasonal data. Finally, the residual layer may capture any irregular variations that are left over in the data and could not be captured by either the trend and/or seasonal layers.

A contributor 'contributes' some amount (e.g., a fixed or varying amount of load requirement) to the overall static induction device monitoring data. The contributor may comprise a known event with potential to cause variability in the monitoring data. By "known event" it is here meant an event that can be anticipated because it may be (regularly) scheduled and/or reoccurring. Examples of such an anticipated event can be a sporting event, the airing of a TV-program, the lighting of Christmas decorations in cities, a national holiday, etc. Having prior knowledge of a certain event happening and knowing that this specific event has the potential to cause variability in the monitoring data, e.g., a higher energy consumption in a specific region of a country, may have the advantage of tuning and (re)training the models to accommodate and predict for this specific event. Thereby, more effective and efficient power network management can be achieved.

The method according to the present aspect further comprises providing each layer, as input, to a respective predictive model of a corresponding plurality of predictive models configured to predict future contributions to the monitoring data from the respective contributor. By inputting each layer to a respective predictive model, it is possible to train the models more efficiently. That is, instead of training one single model on the time-series data, multiple models may be trained to predict values for different underlying patterns (resulting from different contributors) in the data. Thus, the inputting of the layers into respective predictive models is advantageous as more specific underlying patterns may be learned by the models, and hence the prediction quality/accuracy can be improved.

According to preferred examples, at least one prediction model of the plurality of prediction models is a Long Short Term Memory (LSTM) neural network. LSTM neural networks handle long-term dependencies in sequential data, a quality that is particularly useful for time-series data, where patterns and dependencies over time are crucial. Robustness, another property of prediction models that is generally desired, is another aspect of LSTM networks that makes them advantageous. A robust network is less sensitive to noise in input data, and thus more capable of learning underlying patterns in the data.

The method may further comprise extracting features from the time-series data based on at least one predictive model of the plurality of predictive models. By extracting features based on the particular requirements and fundamentals of the predictive model(s), it is possible to improve the training of the models. Extracting features before decomposition may be advantageous in helping to identify the most relevant variables and in reducing noise. Decomposing time-series data with well-defined features can support understanding of the underlying patterns in the data. Examples of feature extraction include encoding information (e.g., converting categorical data into numerical format) and dimensionality reduction, such as Principal Component Analysis (PCA).

The method then comprises receiving, as output from the plurality of predictive models, respective predictions of future contributions from the contributor of each layer, and aggregating the predictions from each predictive model to thereby obtain predicted monitoring data for the static induction device.

To further improve the accuracy of the models, the method may further comprise steps of transforming the subset of the time-series data of a layer before providing, and obtaining the predictions of future contributions from the contributor of each layer by detransforming an intermediate output from the plurality of predictive models, wherein said detransforming is an inverse operation of the transforming. Transforming the subset of the time-series data may comprise, for example, scaling numerical time-series data to within -1 and 1.

An advantage of scaling data is that it ensures that all features contribute equally to the model's learning process. This may be particularly important for gradient descent-based methods. Furthermore, other types of transformations may reduce complexity of the data by for example reducing the dimensionality of the data, making a model simpler and faster to train while retaining most of the important information.

In some examples, a control to be taken (e.g., by a component controller or the like) may be determined based on the predicted monitoring data. By taking a control based on the predicted monitoring data, as opposed to based on the current status of the static induction device, future faults and any faulty conditions may be anticipated. Taking preventative measures, instead of merely addressing already occurred issues, may ultimately increase the lifespan of the static induction device. As an addition or alternative to controlling the static induction device based on predicted monitoring data, a suggested control may be output for review by an operator.

Preferably, at least one prediction model of the plurality of prediction models is periodically retrained. Keeping the model up to date to output more reliable predictions can be done by adapting to new data through retraining. Retraining may correct for biases that were present in initial training data, but that have been mitigated in new monitoring data. Biases may be calibration errors, human errors but even stray currents or environmental factors can introduce bias in the monitoring data. Retraining with more diverse and representative data can help correct these biases. Furthermore, retraining a model may enhance robustness by continuously learning from a broader set of data. The retraining can be performed offline, after which the newly updated models can be deployed, similar to how a software update would be deployed to a system.

According to further aspects of the present disclosure, there is provided a data processing system comprising means for carrying out any of the above-described methods. Moreover, a static induction device monitoring system comprising such a data processing system is provided, as well as a power installation comprising a static induction device and the aforementioned static induction device monitoring system.

In yet further aspects, a computer program is provided, comprising instructions which, when the program is executed by a computer, cause the computer to carry out any of the above-described methods. A computer-readable medium is also provided, comprising instructions which, when executed by a computer, cause the computer to carry out any of the above-described methods.

The benefits may extend beyond just protecting individual components/devices. By ensuring optimal component operation across a power network, the overall efficiency of the power network can be enhanced. This can translate to reduced energy losses and improved reliability for users of the power network. The data-driven approach described herein provides a more resilient and sustainable power network for the future.

### Brief Description of the Drawings

One or more embodiments of the present disclosure will be described, by way of example only, and with reference to the following drawings (or 'figures'), in which:
Figure 1 schematically shows an example power network comprising power transformers;
Figure 2 schematically shows an example power transformer station with a monitoring unit and a database;
Figure 3 schematically shows a method for monitoring a power transformer, according to aspects of the present disclosure;
Figure 4 illustrates an example training scenario for a predictive model;
Figure 5 schematically shows retraining of predictive models, according to an example implementation of the present disclosure; and
Figure 6 schematically shows an example refinement of the method shown in figure 3.

### Detailed Description

The present disclosure is described in the following by way of a number of illustrative examples. It will be appreciated that these examples are provided for illustration and explanation only and are not intended to be limiting on the scope of the present disclosure. Instead, the scope of the present disclosure is defined by the appended claims.

Furthermore, although embodiments be presented individually for the sake of focused discussion of particular features, it will be recognized that the present disclosure also encompasses combinations of the embodiments described herein.

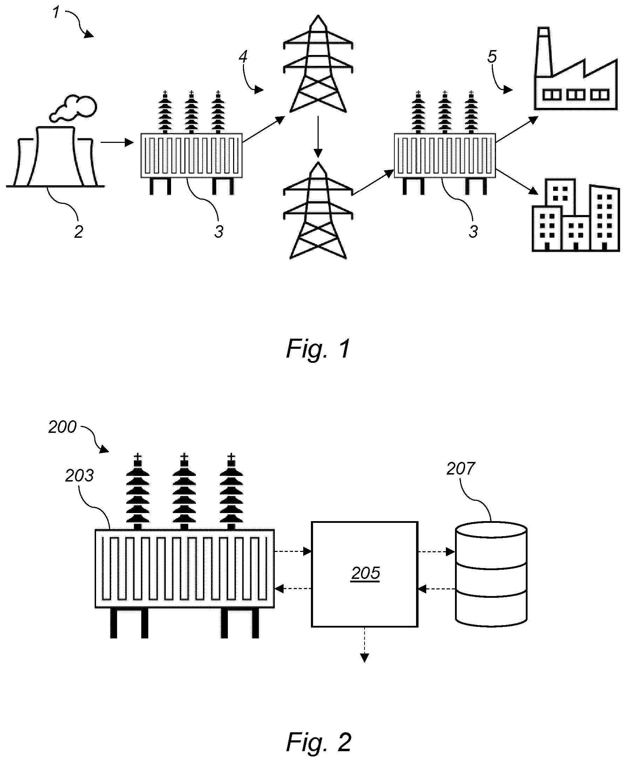

Figure 1 contains a high-level illustration of an example power network 1 wherein a transmission network 4 connects a power generator 2 to loads 5 via transformers 3. The transformers 3 in the power network 1 are, from left-to-right, a step-up transformer and a step-down transformer. The transformers 3 are an example of static induction devices. It will be appreciated that the below description may apply also to other (power) transformers, other static induction devices such as reactors, or other electrical components on the power network.

When a transformer 3 "steps up" voltage, the transformer 3 increases the voltage of the electrical power while decreasing the current onto the transmission network 4. For long-distance transmission, step-up transformers reduce energy loss in the form of heat in the transmission network 4. Step-down transformers, on the other hand, reduce the higher voltage to a lower voltage from the transmission network 4 to loads 5. On the load side of the power network 1, the electricity is distributed to loads 5 including end-users, such as homes, businesses and industries.

Both the power generator 2 (e.g., a power station such as a wind farm or nuclear power station) and the loads 5 may be variable over time. For example, the power generation of a wind farm may substantially change based on a weather situation. As another example, the amount of energy consumed by industry or homes may substantially change depending on the time of day. As will be understood, such variabilities will affect the operation of the transformers 3, and large variabilities may risk an overloading of the transformers 3.

Figure 2 shows an example of a power transformer station 200 with a transformer 203, which may correspond (at least in its function) to one or both of the transformers 3 from figure 1, communicatively connected to a monitoring unit 205. The monitoring unit 205 is communicatively connected to a database 207. Communication between the transformer 203, the monitoring unit 205, and/or the database 207 can be wired or wireless, depending on available infrastructure and latency requirement. Examples of wireless communication protocols that can be implemented are WiFi, Bluetooth, Near Field Communication (NFC) or cellular network communication. Wired communication protocols include ethernet, Universal serial bus (USB), inter-integrated circuit (I2C) and controller area network (CAN). It is appreciated that a person skilled in the art will be able to determine suitable communication protocols for specific situations.

In certain embodiments of the present disclosure, the monitoring unit 205 may comprise sensors for monitoring properties of the transformer 203 or an associated environment - referred to herein as monitoring data. In other embodiments, one or more sensors (not shown) may provide such monitoring data to the monitoring unit 205.

According to example implementations of the present disclosure, the monitoring unit 205 collects monitoring data and stores it in the database 207. Examples of properties of the transformer 203 comprised in the monitoring data include temperature, load, dissolved gas analysis, tap position, cooling control status, vibroacoustics, sweep frequency response analysis, or the like. Examples of information of an associated environment, which may be relevant to monitoring of the transformer 203, may comprise weather information and/or ambient temperature around the transformer station 203.

It will be understood that monitoring data to be collected by the monitoring unit 205 may be any data that is relevant to the control or health of the transformer 203 or the power network as a whole. It may be preferred to collect as much monitoring data as possible, or it may be preferred to selectively collect monitoring data that is most closely associated or correlated with health or control decisions for the transformer 203.

The database 207 may be a cloud-based data storage with the physical data center being located at a location different from the transformer 203 and/or the monitoring unit 205. In other examples, the database 207 is an on-site database located in the vicinity of the transformer 203 and/or the monitoring unit 205. Communication between the monitoring unit 205 and the database 207 may be real-time, or data may be transferred at scheduled intervals, in which case the monitoring unit 205 may comprise an internal data storage to temporarily store data before it is communicated to the database 207. It is appreciated that communication between the monitoring unit 205 and the database 207 may be bidirectional.

The monitoring unit 205 can be further configured to instruct or suggest actions. Such actions may comprise control or maintenance actions for the transformer 203. For example, an action can be to call upon a human service manager or to perform an automated instruction. A maintenance action taken by a human service manager can for example be to perform inspections to address potential mechanical faults. Automated actions may also be to trigger cooling fans or oil pumps to manage temperature and prevent overheating.

The variabilities in generation and/or load discussed above will manifest in the transformer monitoring data. These variabilities may be partly predictable (e.g., the time of the start or end of a working day) and partly unpredictable (e.g., the amount of wind). Aspects of the present disclosure are directed at improving the prediction of changes in the monitoring data so that actions or suggestions can be proactively generated with a longer time horizon and with greater accuracy or specificity. For example, if it is predicted that a greater load demand is coming, then cooling fans may pre-emptively (over-)cool the transformer 203 (more than the current monitoring data would otherwise justify) so as to reduce the risk that the transformer 203 overheats when this greater load demand occurs.

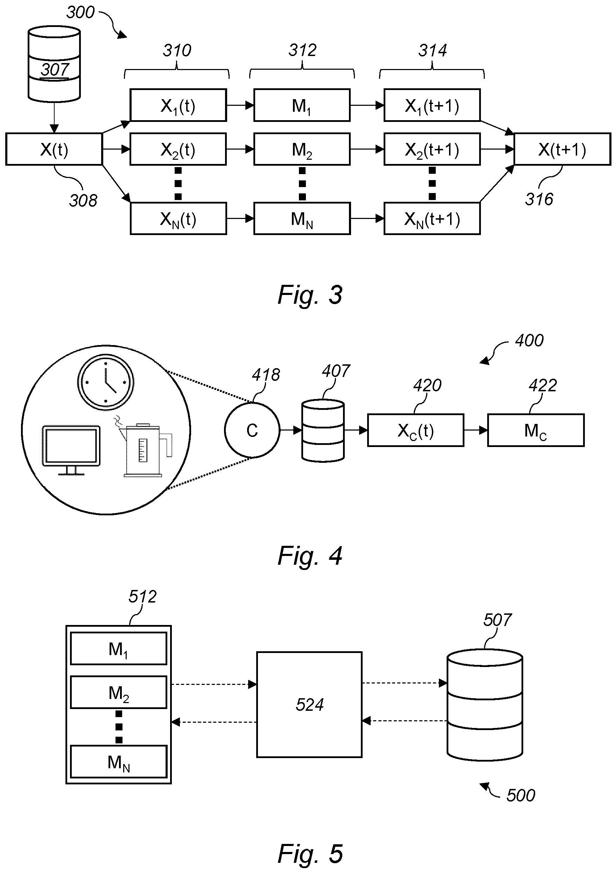

The monitoring unit 205 can comprise internal monitoring libraries (not shown). These libraries may include algorithms that can be compiled and called upon by a processor. The algorithms in the monitoring libraries may be programmed to process data and may provide predictive functionality (e.g., as discussed above) through implementations of regression algorithms, neural networks, or the like, as discussed in more detail in association with figure 3.

Figure 3 schematically shows a method 300 for monitoring a static induction device, such as the transformer 203 in figure 2, according to aspects of the present disclosure. The method may be performed by a processing device, such as the monitoring library 205 discussed above in relation to figure 2.

Time-dependent monitoring data, or time-series data, 308 is obtained from database 307 (which may correspond to the database 207 shown in figure 2) and the timeseries data 308 is decomposed into a plurality of layers 310. The time-series data 308 may comprise, for example, temperature or load data for a static induction device and may have been collected by sensors in, on, or around the device. The time-series data 308 may further comprise externally-sourced data from other sensors or from other available data sources.

In this example, each layer of the plurality of layers 310 comprises a subset of the time-series data, and at least one of the layers contains a respective contribution to the time-series data 308 from a contributor. In some examples, the layers 310 comprise a trend layer, a seasonal layer and a residual layer. Other types of time-dependent or event-related layers may be extracted from the time-series data 308, depending on the intended use and/or intended prediction.

The layers 310 are provided as input to a respective predictive model of plurality of predictive models 312 configured to predict future contributions, referred to herein as predictions 314, to the time-series data 308 from a respective contributor. The models 312 may be stored in the internal monitoring library of for example the monitoring unit 205 in figure 2. All of the models 312 may have the same architecture, or at least some may differ from some others. Retraining the models 312 can be done offline after which they can be (re)deployed to the monitoring library.

Next, respective predictions 314 from the contributor of each layer are received and the predictions 314 from each predictive model are aggregated to thereby obtain predicted monitoring data 316 for the static induction device. The predictions 314, and consequently the predicted monitoring data 316, have a prediction horizon of a certain amount of time ahead of the current time. The prediction horizon can be chosen based on different aspects, such as properties of the monitored device, maintenance schedules or available computational power. Example prediction horizons include 1 hour, 8 hours, 12 hours, 24 hours, or more or less. The prediction horizon may be a configurable quantity.

Thus, it is seen from the method illustrated in figure 3 that a prediction for the monitoring data X(t) 308 can be obtained for a time t+1, i.e., some future time horizon. Actions or suggestions for device control or maintenance may thus be derived from the predicted monitoring data X(t+1) 316.

The decomposition of the time-series data 308 into layers 310, and use of predictive models 312 on a layer-by-layer basis, provides the prediction 316 with enhanced accuracy. Viewed from one perspective, the models 312 may be trained to predict a particular variability, and a more accurate prediction 314 can be obtained if the variability is more predictable. It is realized as a part of the present disclosure that, what may appear as random variations in the monitoring data may in fact be substantially comprised of predictable or quasi-predictable changes, which can thus be assigned to a particular layer. The accuracy of a prediction 314 for such a predictable or quasi-predictable change can thus be very high.

Although not all variability may be accountable for in this way, the extraction of as much `predictable' variability in the monitoring data as possible ensures that a minimal amount of 'randomness' or 'pseudo-randomness' is left in the data - randomness is, by definition, more difficult to predict.

According to aspects of the present disclosure, at least one layer 310 is configured to contain a respective contribution to the monitoring data from a contributor. Hence, the model 312 that said layer 312 is provided to is preferably trained on data corresponding to the contributor. Such an approach is discussed below in connection with figure 4. However, it will be appreciated that training of the models 312 may not be required. Indeed, not every example implementation of the models 312 is a machine learning model - these models 312 may instead be, for example, a simple regression model. Still, with such implementations, the greater predictability of an extracted layer 310 allows for an increased accuracy of the output prediction 314.

Figure 4 shows an example of a training scenario 400 for a predictive model 422. Given a certain contributor 418, such as a sports game on television leading to many consumers putting on the kettle on at half-time, time series data stored in database 407, which might be the same database 307 and/or 207, regarding this contributor 418 is isolated. The database 407 might be a publicly available database from which time series data 420 can be extracted.

It is seen in this example that a 'contributor' 418 is a quasi-predicable event wherein significant load may be added to the power network, which will in turn add stress to the electrical components thereon.

In some examples, the time-series data 420 may be isolated time-series data having only contributions from the contributor in it. This may be obtainable by performing isolated experiments, by simulating the effect of the contributor, or by pre-processing a larger pool of data.

In order to train the model 422, part of the time-series data 420 may be used for training purposes and part of the time-series data 420 may be used for validation purposes and a third part may be used for testing the model 422. It will be appreciated that those skilled in the art are able to identify suitable methods, for example cross validation, to split the time-series data 420 into training, validation and testing folds.

Those skilled in the art will also be able to create or source suitable training data for such a training process. Therefore, specific examples are not provided herein. For example, with the example contributor 418 discussed above, time-series data for load on the power network from domiciles, corresponding to the times of previous sports matches, may be isolated from a wider pool of power network load data.

Periodically, the models may be retrained by requesting (new) data from one or more sources to retrain on. When appropriate, the model is then redeployed into the monitoring library. The model 422 can be retrained as much or as little as necessary depending on their performance and on the changing behavior of the system and/or consumers. In some examples, the models may be automatically retrained periodically.

Figure 5 schematically shows an example of retraining models 512. Database 507, which might the same database as the ones in any of the other figures, might have gathered new or additional data, on which it is desired to retrain the models to improve prediction accuracy. The retraining of models 512 can be done by a (re)training module 524. The (re)training module 524 may be included in the monitoring libraries of monitoring unit 205 from figure 2 or may be a separate entity, such as an external GPU with sufficient processing power to (re)train neural networks in a reasonable amount of time.

Retraining may be performed offline, and during the time retraining is performed, the current, not-yet-updated models 512 may still be in working order to continue predicting future monitoring data. After finishing the retraining, the retrained models may be deployed to update the models 512, thereby ensuring uninterrupted operation of the transformer station.

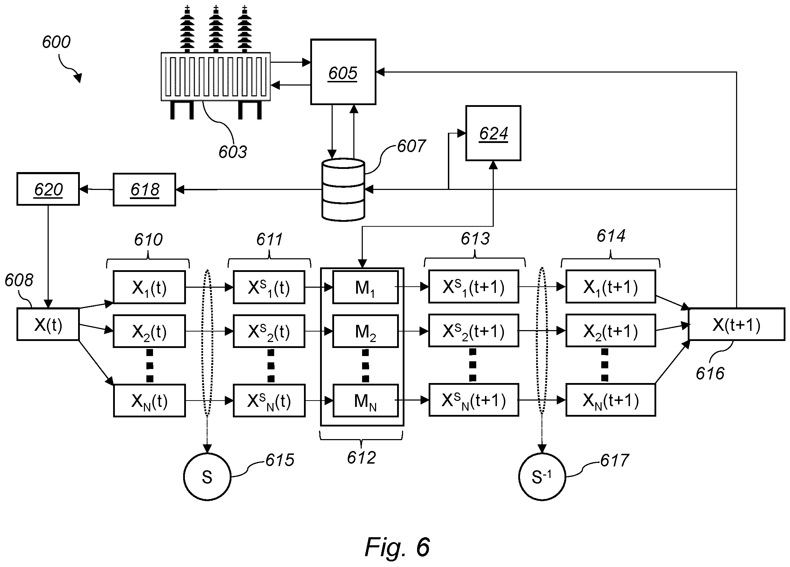

Figure 6 schematically shows an example refinement of the method shown in figure 3. Steps/components having reference numerals differing by a multiple of 100 from previously used reference numerals may correspond to those illustrated and referenced in previous figures, at least in their function. Hence, these steps/components may not be discussed again in full detail.

The illustrated method 600 is performed in association with a transformer 603, which may be the same transformer (or one of the transformers) as in any of the previous figures. The transformer 603 is monitored, either directly by the monitoring unit 605 (which, in turn may be the same monitoring unit as monitoring unit 205 in figure 2) through a communicative connection, or via a monitoring sensor connected to the monitoring unit 605. The monitoring unit 605 is communicatively connected to database 607 (which can correspond to any of the databases in previous figures).

As mentioned before, the transformer 603 is merely an example of an electrical component on the power grid with respect to which aspects of the present disclosure may be applied. Other electrical components may comprise bushings, switches, connectors, or the like. Particularly, the transformer 603 is an example of a static induction device. Another example of a static induction device is a reactor.

Further as mentioned before, the communication protocol between the monitoring unit 605 and the transformer 603 and between the monitoring unit 605 and the database 607, can be same or can be a different protocol. From database 607 time-series data 618 is extracted.

The time-series data 618 can be pre-processed by imputing data (i.e., filling out missing or incomplete datasets), or by applying any other pre-processing steps to the data. From the pre-processed data 620, features can be extracted by applying a rolling window to the pre-processed time-series data 620. Pre-processing and feature extraction can be done by various algorithms included in the monitoring libraries. Once the data is pre-processed and features are extracted, a time dependent data set, or time series data 608, is obtained.

The time-series data 608 is decomposed into a plurality of layers 610, wherein each layer can uncover a different pattern in the time-series data 608 with respect to different contributors, similar to as discussed above.

Once the time-series data 608 is decomposed into layers 610, the layers can be transformed. That is, a transformation 615 can be applied to all layers in similar fashion, or one or more layers can be transformed independently and through different operations. In some embodiments, the transformation 615 can be to scale the data by for example normalizing the data or by applying a sigmoid function to the data. The transformed layers 611 are input to the models 612, which in this example have been trained and/or are retrained by (re)training module 624.

(Re)training module 624 may be the same module as the (re)training module 514 in figure 5. The (re)training module 624 is connected to the database 607, from which it may receive training data. The training data can be monitoring data from monitoring unit 605 or can be other publicly available data sourced elsewhere and stored in database 607. (Re)training the models 612 can be done offline, after which they can be deployed for example into the monitoring libraries of the monitoring unit 605.

In this example, the architecture of at least one of the models 612 is a Long Short Term Memory (LSTM) neural network, which is a type of recurrent neural network (RNN) that aims to provide a short-term memory for a RNN that can last for a substantial number of timesteps. It will be appreciated that the implementation of such an architecture is not part of the scope of the present invention but will be within the capability of those skilled in the art.

The output of models 612 are transformed predictions 613 for each layer. Applying a detransformation 617 to the predictions 613 for each layer results in detransformed predictions 614. Detransforming the data, at least in this example, means applying the inverse operation of the transformation 615 (i.e., S⁻¹ as the inverse of the process S).

The detransformed predictions 614 are then aggregated to obtain the predicted monitoring value 616. The predicted monitoring value 616 can be stored to the monitoring unit 605, which can, based upon the predicted value 616, take a maintenance action to ensure optimal and/or safe performance of the transformer 603.

The method 600 may persist as a control loop processing substantially real-time data and generating real-time controls or suggestions. Alternatively, the method 600 may only be performed intermittently, for example once every prediction time horizon. As an example, a prediction of monitoring data for the next day (as one or more datapoints) may be generated. Controls or suggestions for the next day may thus be generated proactively/pre-emptively.

Hence, it will be readily understood that the improved predictions provided by aspects of the present disclosure enable an enhanced function of components on a power network and, by extension, improve the quality and stability of the power network in which such components are installed.

While the present disclosure is susceptible to various modifications and alternative forms, specific embodiments are shown and described above by way of example in relation to the drawings, with a view to clearly explain the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims.

## Claims

1. A computer-implemented method for monitoring a static induction device, comprising:
obtaining time-series data comprising monitoring data for the static induction device;
decomposing the time-series data into a plurality of layers, each layer comprising a subset of the time-series data, wherein at least one layer is configured to contain a respective contribution to the monitoring data from a contributor;
providing each layer, as input, to a respective predictive model of a corresponding plurality of predictive models configured to predict future contributions to the monitoring data from the respective contributor;
receiving, as output from the plurality of predictive models, respective predictions of future contributions from the contributor of each layer; and
aggregating the predictions from each predictive model to thereby obtain predicted monitoring data for the static induction device.

2. The computer-implemented method according to claim 1, further comprising extracting features from the time-series data based on at least one predictive model of the plurality of predictive models.

3. The computer-implemented method according to claim 1 or claim 2, wherein the monitoring data comprises load data and/or temperature data for the static induction device.

4. The computer-implemented method according to any preceding claim, further comprising:
transforming the subset of the time-series data of a layer before providing; and
obtaining the predictions of future contributions from the contributor of each layer by detransforming an intermediate output from the plurality of predictive models, wherein said detransforming is an inverse operation of the transforming.

5. The computer-implemented method according to any preceding claim, wherein the plurality of layers comprises:
a trend layer;
a seasonal layer; and
a residual layer.

6. The computer-implemented method according to any preceding claim, wherein the contributor comprises a known event with potential to cause variability in the monitoring data.

7. The computer-implemented method according to any preceding claim, wherein at least one prediction model of the plurality of prediction models is periodically retrained.

8. The computer-implemented method according to any preceding claim, wherein at least one prediction model of the plurality of prediction models is a Long Short Term Memory (LSTM) neural network.

9. The computer-implemented method according to any preceding claim, further comprising determining a control to be taken based on the predicted monitoring data.

10. A data processing system comprising means for carrying out the method of any preceding claim.

11. A static induction device monitoring system comprising the data processing system according to claim 10.

12. A power installation comprising a static induction device and the static induction device monitoring system according to claim 11.

13. A computer program comprising instructions which, when the program is executed by a computer, cause the computer to carry out the method of any of claims 1 to 9.

14. A computer-readable medium comprising instructions which, when executed by a computer, cause the computer to carry out the method of any of claims 1 to 9.
